(19) **Europäisches Patentamt**

**European Patent Office**

**Office européen des brevets**

(11) **EP 0 838 105 B1**

(12) **EUROPEAN PATENT SPECIFICATION**

(45) Date of publication and mention
of the grant of the patent:
**28.04.2004 Bulletin 2004/18**

(21) Application number: **95926608.1**

(22) Date of filing: **13.07.1995**

(51) Int Cl.⁷: $H04B\ 1/707$

(86) International application number:
**PCT/US1995/008234**

(87) International publication number:
**WO 1997/003503 (30.01.1997 Gazette 1997/06)**

(54) **MULTIPATH RESISTANT, ORTHOGONAL CODE-DIVISION MULTIPLE ACCESS SYSTEM**

ORTHOGONALCODEVIELFACHZUGRIFFSYSTEM MIT MEHRWEGUNTERDRÜCKUNG

SYSTEME D'ACCES MULTIPLE PAR DIFFERENCE DE CODE ORTHOGONAL RESISTANT AUX
TRAJETS MULTIPLES

(84) Designated Contracting States:
**AT BE CH DE DK ES FR GB GR IE IT LI LU MC NL
PT SE**

(43) Date of publication of application:
**29.04.1998 Bulletin 1998/18**

(73) Proprietor: **STANFORD TELECOMMUNICATIONS,
INC**
**Sunnyvale, CA 94088-3733 (US)**

(72) Inventors:
• **MAGILL, David, Thomas**
**Palo Alto, CA 94303 (US)**
• **CHEN, Horen**
**Saratoga, CA 95070 (US)**

(74) Representative: **Jones, Graham H.**
**Graham Jones & Company**
**Blackheath**
**77 Beaconsfield Road**
**London SE3 7LG (GB)**

(56) References cited:
**US-A- 5 103 459** **US-A- 5 375 140**

• **Spread-Spectrum Technology for Commercial
Applications - D. T. Magill, F. D. Natali, G. P.
Edwards. IEEE Proceedings, Vol. 82, n. 4, April
1994**

**Description**

## BACKGROUND AND BRIEF DESCRIPTION OF THE INVENTION:

Orthogonal code-division multiple access (OCDMA) has been proposed (U.S. Patent No. 5,375,140 and U.S. patent application Serial No. 08/257,324 filed June 7, 1994) as an effective technique for improving the capacity, i.e., bandwidth efficiency, of the more conventional quasi-orthogonal CDMA (QOCDMA). QOCDMA is frequently referred to as asynchronous CDMA since the chips (for direct sequence PN) or the hops (for pseudo-random hopping) are not aligned in time. As a consequence of the non-alignment, or asynchronicity, it is not possible to achieve true orthogonality and QOCDMA systems suffer from interference from other system users or what is commonly known as access noise. As a result of this access noise QOCDMA systems cannot achieve as high a capacity, i.e., number of channels, in a given amount of bandwidth as can an orthogonal system such as OCDMA.

As noted above, OCDMA requires time base alignment of all accesses and this can be done readily in star networks provided that the subscriber terminals, i.e., remote units, are not moving too quickly nor are too far removed from the base station, i.e., hub of the star network. In addition, there is another propagation condition that must be met that is of particular concern when the subscriber terminals employ antennas that do not have a great deal of directivity. In such situations there may be considerable multipath and the delayed path signals will contribute access noise since these signals being non-aligned in time will be non-orthogonal. However, if the multipath delay spread is small in comparison to the chip duration of the orthogonal codes, the impact of the multipath signals is negligible. By choosing a suitably low chipping rate and restricting operation to indoor environments, where the delay spread is quite small, this condition may be assured. Thus, the first application of OCDMA has been to a wireless PBX where these conditions can be met.

The object of the present invention is to extend this system to those environments where there is a significant delay spread in comparison to the duration of the orthogonal code chip duration.

## THE PROBLEM:

There are really two problems. One problem occurs at the subscriber terminal and the other at the base station. At the subscriber terminal the problem could be solved through the use of an equalizer which would remove or alleviate the effect of the multipath and restore orthogonality. However, at the base station this approach is not feasible since each signal traverses a different path to the base station and, consequently, has a different multipath profile. Thus, an equalizer operating on the composite signal is presented with an impossible task of simultaneously equalizing multiple paths. Thus, it is desirable to find a solution which may be applied to both inbound and outbound links from the base station.

The object of the invention is to provide a solution which may be applied to both inbound and outbound links from the base station.

According to the present invention, the OCDMA system is made more tolerant of multipath delay spread by the introduction of high rate PN spreading where there are multiple, e.g., eight to 64 PN chips per each Rademacher-Walsh (RW) chip. The general concept is to set the PN chipping rate high enough such that the correlator in the demodulator will provide processing gain discrimination against multipath components delayed more than a small fraction of a RW chip. Thus, the impact of large delay components will be reduced by the PN processing gain. Small delay multipath components will have a negligible impact on performance (see D.T. Magill, F.D. Natali, and G.P. Edwards, "Spread-Spectrum Technology for commercial Applications", Proceedings of the IEEE, April 1994, pp. 572-584.) For example, if it is concluded that multipath components less than 5% of a RW chip duration will have negligible impact on system orthogonality, then using 20 PN chips per RW chip is sufficient to realize a substantial performance improvement.

Thus, use of a higher rate PN code provides protection against multipath fading due to components delayed by more than one PN chip. If the environment is such that it is certain that all components are delayed by at least one chip, then the need for antenna diversity can be avoided.

As presented so far the high rate PN code has been introduced only for multipath suppression which is obtained at the price of a substantially higher bandwidth requirement resulting in poor system bandwidth efficiency as compared to OCDMA. There are two approaches for solving this problem.

The first approach is to simply use QOCDMA to increase the capacity of the occupied bandwidth. Other high rate QO PN codes would be assigned to sets of self-orthogonal users. The disadvantage of this system is that QO access noise would result from these other sets of users. In a typical situation the majority of accesses would no longer be orthogonal and the performance would be that of a QOCDMA. While this improves capacity beyond that achieved with a single high rate PN code (and single carrier frequency) it does not result in the best achievable performance. Nevertheless, in many cases it is a practical approach to enhancing the performance of an existing OCDMA system operating in a multipath environment. It should be noted that the resulting system offers little, if any, bandwidth efficiency advantage with respect to the more conventional QOCDMA.

The second, and much preferred, approach utilizes orthogonal frequency-division multiple access to increase the bandwidth efficiency. With this approach, new accesses are introduced by replicating the existing signal structure (including the same PN code) at carrier offsets at multiples of the RW chipping rate. While the spectra overlap, so long as all of the signals are timed to a small fraction of a RW chip duration, the signals will be essentially orthogonal. Furthermore, for those multipath components delayed by more than one high rate PN chip the delayed component will be reduced by the PN processing gain. Thus, while performance may be degraded somewhat from truly orthogonal system performance, it will be superior to that achievable with QOCDMA.

For the first approach the transmitted signal set is given by:

$$S_{ik}(t) = PN_{HR}, k(t) \cdot PN_{LR,k} \cdot (t) \cdot RW_i(t) \cdot [\alpha(t) + jb(t)] \cdot \cos(\omega_o t)$$

where $PN_{HR,k}(t)$ is the high rate PN code for the k-th set of accesses, $PN_{LR,k}(t)$ is the low rate PN code for the k-th set of accesses (necessary to randomize and equalize the properties of the different RW functions which are inherently different), $RW_i(t)$ is i-th RW function, and $[\alpha(t)+jb(t)]$ is the complex-valued baseband data modulated signal (typically a QPSK signal but high order modulation may be desirable in some circumstances).

For the second approach the transmitted signal is given by:

$$S_{ik}(t) = PN_{HR}(t) \cdot PN_{LR}(t) \cdot RW_i(t) \cdot [\alpha(t) + jb(t)] \cdot \cos(\omega_o t + \delta\omega \cdot k \cdot t)$$

where the notation is generally the same as above. The subscript k has been dropped on the two PN codes since the same codes are used for all accesses. The additional sets of accesses are supported by angular frequency offsetting by the amount $\delta\omega \cdot k$ which corresponds to 2n times integer multiples of the RW chipping rate.

Demodulators for the base station differ in that the delay discriminator output is not used to control the local correlator time base. Rather, the delay discriminator output is transmitted to the subscriber terminal by way of an order wire as described in U.S. Patent No. 5,375,140.

Gilhousen et al U.S. Patent No. 5,103,459 discloses an orthogonal code division multiple access system (OCDMA). The wireless telephone system has a base station and a plurality of mobile end sets. Modulator and demodulator means in the base station in each of the mobile handsets are provided. Gilhousen's modulator provides exactly four PN chips for every Walsh chip.

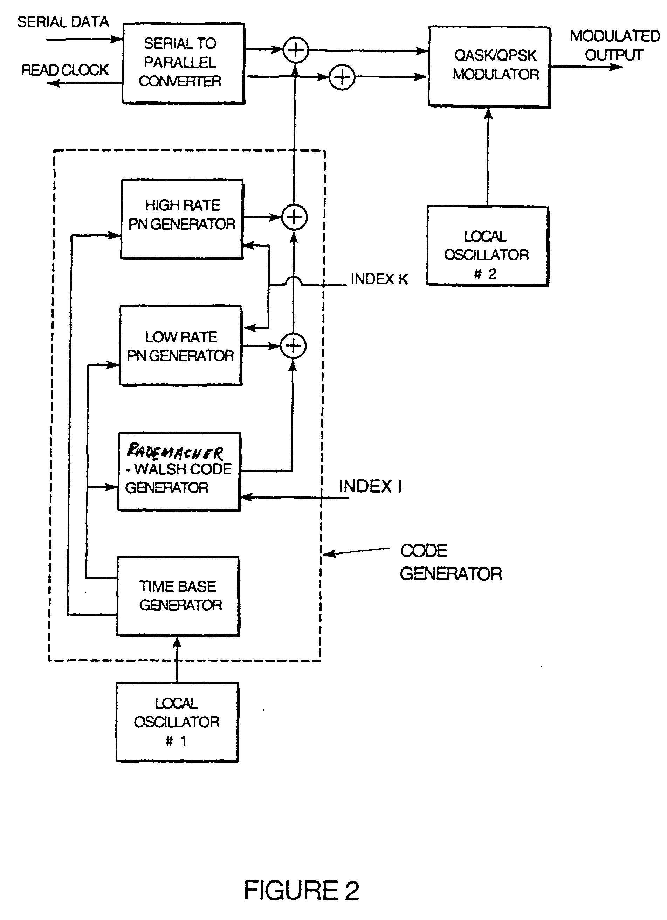

The present invention provides an orthogonal code division multiple access (OCDMA) radio communication system having a base station and a plurality of mobile handsets; said base station and each of said mobile handset comprising receiving demodulator (15, 39) and sending modulator (14, 33) means, said receiving demodulator and sending modulator means including a code generator (fig. 2, 3, 4);
each receiving demodulator means having:

- a correlator for providing a demodulator output signal;

each sending modulator means having:

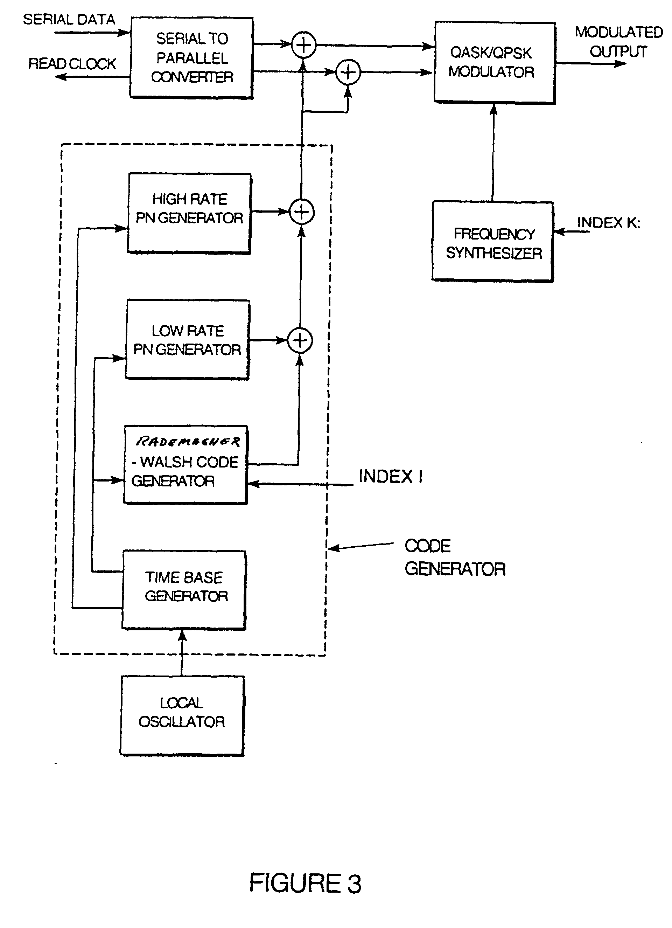

- means to sum mod-2 (fig. 2, 3) a set of orthogonal Rademacher-Walsh (RW) functions with a pseudonoise (PN) sequence to form a coded spreading sequence for a information signal, each orthogonal function of said set carrying data in said system;

said system characterized in that:
each sending modulator means further comprise:

- means for providing PN chips in the range of eight to sixty-four PN chips per each RW chip;
- means for setting the PN chipping rate in said range so that a correlator, in the receiving demodulator means, provides processing gain discrimination against multipath signal components delayed more that a small fraction of an RW chip duration;

and
the system further comprises
means for providing an orthogonal frequency-division multiple access in which the transmitted signal is given by:

$$S_{ik}(t)=PN_{HR}(t) \cdot PN_{LR}(t) \cdot RW_i(t) \cdot [\alpha(t)+jb(t)] \cdot \cos(\omega_o t+\delta\omega \cdot k \cdot t)$$

where $PN_{NR}(t)$ is the high rate PN code for a set of accesses, $PN_{LR}(t)$ is the low rate PN code for set of accesses, $RW_i(t)$ is i-th RW function, $|\alpha(t)+jb(t)|$ is the complex-valued baseband data modulated signal; and $\delta\omega \cdot k \cdot t$ is the amount of angular frequency offsetting which corresponds to $2\pi$ times integer multiples of the RW chipping rate.

DESCRIPTION OF THE DRAWINGS:

The above and other objects, advantages and features of the invention will become more apparent when considered with the following specification and accompanying drawings wherein;

FIG. 1 is a block diagram of a multipath resistant, orthogonal code-division multiple access digital cellular telephone system incorporating the invention,

FIG. 2 is a block diagram of the modulator for the first or hybrid QO/OCDMA approach and is based on correlation demodulation,

FIG. 3 is a block diagram of the modulator for the preferred orthogonal frequency offset approach, and is based on correlation demodulation,

FIG. 4 is a block diagram of the subscriber terminal demodulator for the hybrid QO/OCDMA approach, and

FIG. 5 is a block diagram of the subscriber terminal demodulator for the preferred orthogonal frequency offset approach.

DETAILED DESCRIPTION OF THE INVENTION:

In the drawings, the following legends apply:

| | |
|---|---|
| QASK | Quadrature Amplitude Shift Keying |
| QPSK | Quadri-phase Shift Keying |
| VCO | Voltage-controlled Oscillator |
| I&D | Integrated-and-Dump Circuit |
| LPF | Low-pass Filter |
| Im{$\cdot$} | Imaginary Part of |
| ($\cdot$)* | Complex Conjugate |
| SGN($\cdot$) | Sign of Real and Imaginary Parts |
| ($\cdot$)$^2$ | Squaring Operation |
| $\pi$ | Complex Multiply |
| $\Delta/2$ | Delay by 1/2 High Rate Chip |

DETAILED DESCRIPTION OF THE INVENTION:

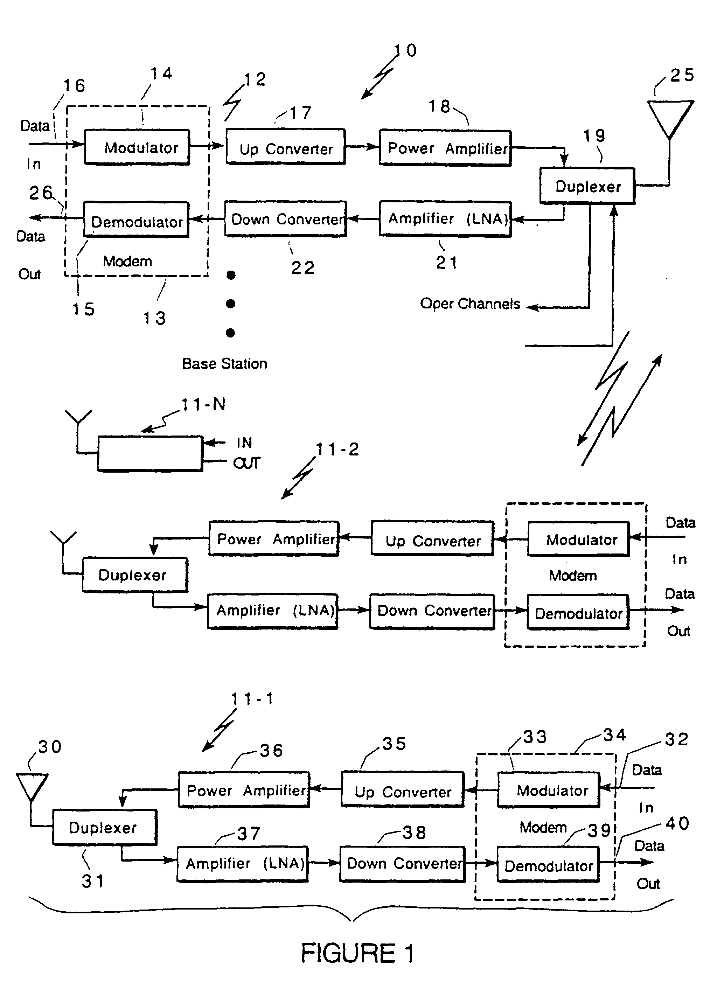

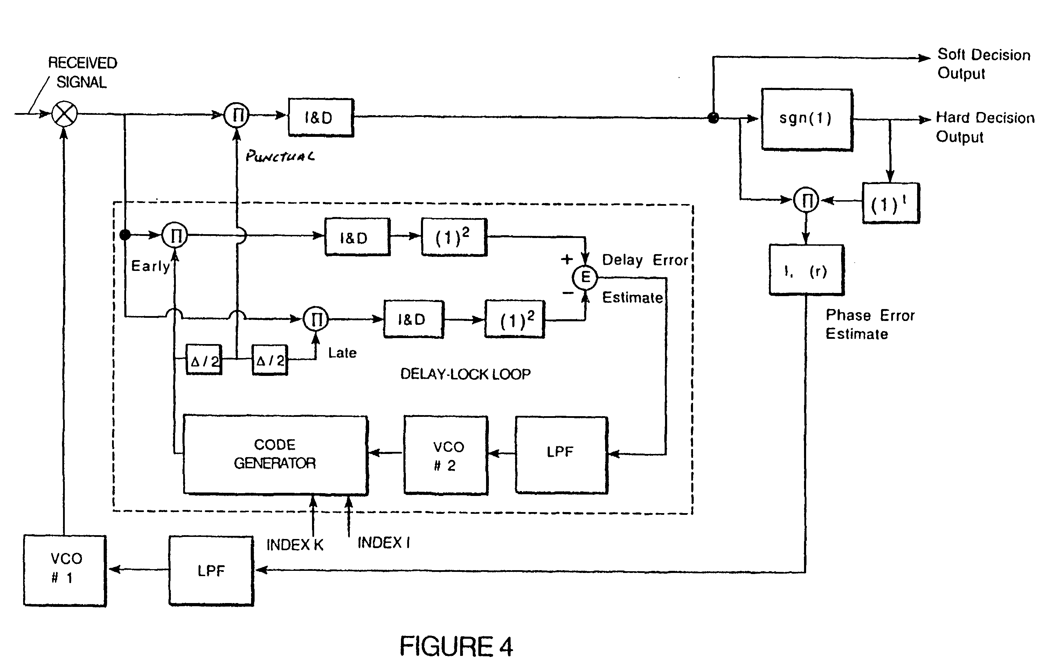

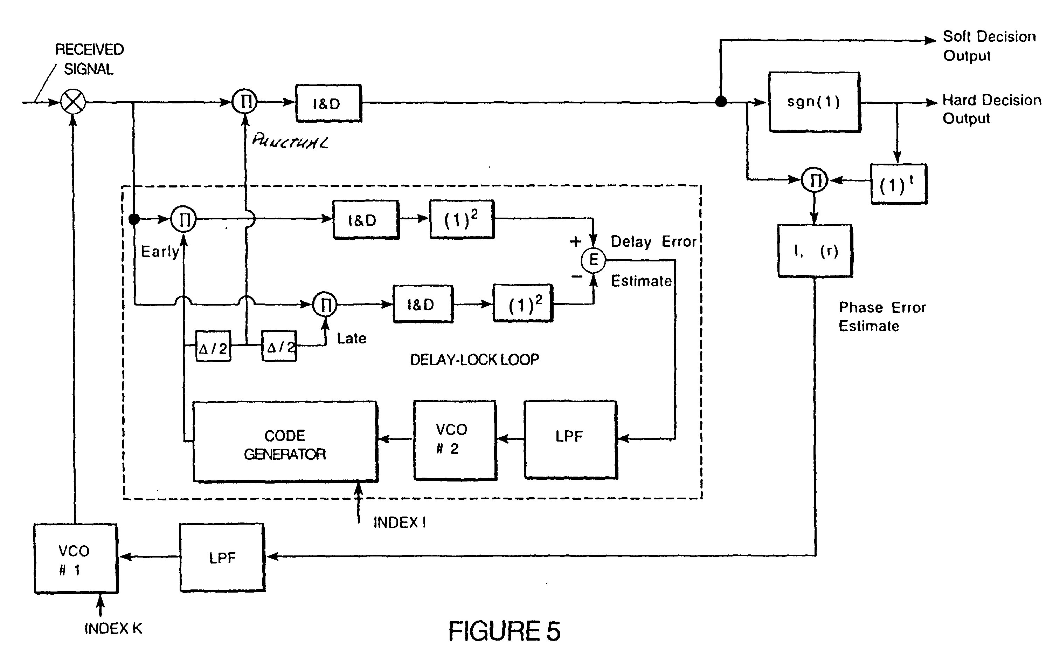

Figure 1 illustrates the hardware configuration for one system hardware set, e.g., basic single base station system configuration. Each hardware set is comprised of a base station 10 and handsets 11-1, 11-2...11-N. The system defines a star network configuration with the base station as the center of the star. The base station 10 contains one modem 12 for each individual user handset in the operating system. Each modem 12 contains a modulator 13 (Fig. 2 or Fig. 3) and a demodulator 14 (Fig. 4 or Fig. 5). Demodulator 14 receives input signals 16, processes the input signals as described herein, and outputs the processed data signals to up-converter 17, power amplifier 18, diplexer 19, and antenna 25 for transmission to the respective subscriber or mobile stations 11-1, 11-2...11-N. Received signals on antenna 25 are routed through diplexer 19 to the proper subscriber channel, amplified by a low noise amplifier (LNA) 21, downconverted in downconverter 22, processed by demodulator 15 and outputted on output 26. The data terminals 16 and 26 are coupled to telephone system (TELCO) by an interface (not shown).

Each subscriber station 11 has an antenna system 30 (which may be of the dual cross polarized-type disclosed in the above-identified applications) coupled by diplexer means 31 to the transmit channel or the receive channel.

In the transmit mode, data 32 is input to modulator 33 in subscriber modem 34 (which is illustrated in detail in Fig. 2 or Fig. 3), up-converted in up-converter 35, amplified by a power amplifier 36 and coupled by diplexer 31 to antenna 30 for broadcast to the base station 10. Received signals are coupled by receiver diplexer 37 and a low noise amplifier (LNA) 37 to downconverter 38 and demodulator 39 (Fig. 4 or Fig. 5) and outputted on 40 to a utilization device (not shown). The other subscriber station are similarly structured.

Figure 2 is a block diagram of the modulator for the first or hybrid QO/OCDMA approach. The input serial data is converted to two parallel data streams each of which has the composite pseudo-random code modulo-2 added to it. The resulting streams are then applied to a modulator to generate the transmitted signal. Normally QPSK modulation will be employed but higher order modulation may be supported by QASK modulation if greater bandwidth efficiency is required.

The composite pseudo-random code is the mod-2 sum of a RW code and the mod-2 sum of a high-rate and a low-rate PN code. Thee codes are selected by the index where k is an integer selected from the set {1, 2,...K}. The index i, which is an integer selected from the set {1, 2...I}, determines the RW code and the orthogonal channel. Thus, there are I*K channels in the system. For practical reasons I is usually either 16, 32 or 64. K is limited by the access noise from the other channels.

Note that all channels use the same carrier frequency. The modulator shown is the one located at the base station. At the subscriber terminal the local oscillator #1 would be replaced with a voltage-controlled oscillator so that the code time base can be corrected as commanded by the base station over the order wire.

Figure 3 is a block diagram of the modulator for the preferred orthogonal frequency offset approach. It is the same as Fig. 2 except that the index k selects orthogonal channels through a frequency synthesizer rather than through code selection.

The demodulators for both approaches are based on correlation demodulation. Code synchronization is achieved through the use of a non-coherent delay-lock loop. As shown in the following block diagrams coherent demodulation is achieved through the use of a decision directed phase-lock loop. However, a more complex block phase estimator can be used and will offer superior performance in fading channels.

Figure 4 is a block diagram of the subscriber terminal demodulator for the hybrid QO/OCDMA approach. Complex notation is used to simplify these diagrams. For example, the block denoted I & D corresponds to two real-valued integrate-and-dump circuits.

Figure 5 is a block diagram of the subscriber terminal demodulator for the preferred orthogonal frequency offset approach. It differs only slightly from Fig. 3.

Demodulators for the base station differ only in that the delay discriminator output is not used to control the local correlator time base. Rather the delay discriminator output is transmitted to the subscriber terminal by way of an order wire as described in U.S. Patent No. 5,375,140.

As shown, the system uses frequency-division duplexing to separate transmit and received signals. As indicated in the above-referenced patent, time-division duplexing (TDD) is frequently superior. In order to support TDD the modulator would need to include a compression buffer and the demodulator an expansion buffer as is typical of TDD systems.

While preferred embodiments of the invention have been described and illustrated, it will be appreciated that other embodiments, adaptations and modifications of the invention will be readily apparent to those skilled in the art.

**Claims**

1. An orthogonal code division multiple access (OCDMA) radio communication system having a base station and a plurality of mobile handsets; said base station and each of said mobile handset comprising receiving demodulator (15, 39) and sending modulator (14, 33) means, said receiving demodulator and sending modulator means including a code generator (fig. 2, 3, 4);

   each receiving demodulator means having:

   - a correlator for providing a demodulator output signal;

   each sending modulator means having:

   - means to sum mod-2 (fig. 2, 3) a set of orthogonal Rademacher-Walsh (RW) functions with a pseudonoise (PN) sequence to form a coded spreading sequence for a information signal, each orthogonal function of said set carrying data in said system;

   said system **characterized in that**:

   each sending modulator means further comprise:

   - means for providing PN chips in the range of eight to sixty-four PN chips per each RW chip;
   - means for setting the PN chipping rate in said range so that a correlator, in the receiving demodulator means, provides processing gain discrimination against multipath signal components delayed more that a small fraction of an RW chip duration;

and
the system further comprises

means for providing an orthogonal frequency-division multiple access in which the transmitted signal is given by:

$$S_{ik}(t)=PN_{HR}(t) \cdot PN_{LR}(t) \cdot Rw_i(t) \cdot [\alpha(t)+jb(t)] \cdot \cos(\omega_o t+\delta\omega \cdot k \cdot t)$$

where $PN_{HR}(t)$ is the high rate PN code for a set of accesses, $PN_{LR}(t)$ is the low rate PN code for set of accesses, $RW_i(t)$ is i-th RW function, $|\alpha(t)+jb(t)|$ is the complex-valued baseband data modulated signal; and $\delta\omega \cdot k \cdot t$ is the amount of angular frequency offsetting which corresponds to $2\pi$ times integer multiples of the RW chipping rate.

**Patentansprüche**

1. Ein orthogonales Code-Mehrfachzugriff-(OCDMA, Orthogonal Code Division Multiple Access) Funk-Nachrichtenverbindungssystem mit einer Basisstation und einer Mehrzahl von beweglichen Hör-/Sprecheinheiten, wobei besagte Basisstation und jede besagter beweglicher Hör-/Sprecheinheiten empfangende Demodulator (15, 39)- und sendende Demodulator (14, 38)- Einrichtungen aufweisen, wobei besagte empfangende Demodulator- und besagte sendende Demodulator-Einrichtungen einen Code-Erzeuger (Fig. 2, 3,4) aufweisen,
jede empfangende Demodulator-Einrichtung hat:

- einen Korrelator um ein Demodulator-Ausgangssignal zu liefern,

jede sendende Modulator-Einrichtung hat:

- Einrichtungen um eine Menge von orthogonalen Rademacher-Walsh (RW)-Funktionen modulo 2 (Fig. 2, 3) mit einer Pseudorauschen (PN)- Folge zu summieren um eine codierte Spreizfolge für ein Informationssignal zu bilden, wobei jede orthogonale Funktion in besagter Menge Daten in besagtem System trägt,

wobei besagtes System **gekennzeichnet ist dadurch**, daß:

jede sendende Modulator-Einrichtung weiter aufweist:

- Einrichtungen zum Schaffen von Pseudorauschen (PN)-Chips im Bereich von 8 bis 64 PN-Chips pro jedem Rademacher-Walsh -Chip;
- Einrichtungen, um die PN-Chipbildungsrate in besagtem Bereich so einzustellen, daß ein Korrelator, in den empfangenden Demodulator-Einrichtungen, eine Verarbeitungs-Verstärkungs-Unterscheidung gegen Mehrweg-Signalbestandteile liefert, die mehr als einen kleinen Bruchteil einer RW-Chipdauer verzögert sind;

und
das System weiter aufweist
Einrichtungen zum Liefern eines orthogonalen Frequenz-Mehrfachzugriffs in dem das gesendete Signal **durch**:

$$S_{ik}(t) = PN_{HR}(t) \cdot PN_{LR}(t) \cdot RW_i(t) \cdot [\alpha(t)+jb(t)] \cdot \cos(\omega_o t+\delta\omega \cdot \kappa \cdot t)$$

gegeben ist,
wo $PN_{HR}(t)$ der PN-Code mit hoher Rate für eine Menge von Zugriffen ist, $PN_{LR}(t)$ der PN-Code mit niedriger Rate für eine Menge von Zugriffen ist, $RW_i(t)$ die i-te RW-Funktion ist, $|\alpha(t)+jb(t)|$ das komplexwertige Grundband-Datenmodulierte-Signal ist und $\delta\omega \cdot \kappa \cdot t$ der Betrag der Winkel-Frequenzversetzung ist, die einem $2\pi$-ganzzahligen Vielfachen der RW-Chiperzeugungsrate entspricht.

**Revendications**

1.  Système de radiocommunication à accès multiple par division orthogonale des codes ("Orthogonal Code Division Multiple Access" - OCDMA) doté d'un poste de base et d'une pluralité de combinés mobiles; ledit poste de base et chacun desdits combinés mobiles comprenant des moyens à démodulateur de réception (15, 39) et des moyens à modulateur d'émission (14, 38), lesdits moyens à démodulateur de réception et lesdits moyens à modulateur d'émission comprenant un générateur de codes (figure 2, 3, 4);

    chaque moyen à démodulateur de réception étant doté d'un corrélateur qui délivre un signal de sortie du démodulateur,

    chaque moyen à modulateur d'émission étant doté de moyens pour additionner modulo 2 (figures 2, 3) un jeu de fonctions orthogonales de Rademacher-Walsh (RW) avec une séquence de pseudo-bruit (PN) pour former une séquence d'étalement de codes pour un signal d'information, chaque fonction orthogonale dudit ensemble transportant des données dans ledit système,

    ledit système étant **caractérisé en ce que**

    chaque moyen à modulateur d'émission comprend en outre des moyens pour délivrer des éléments de PN dans la plage de huit à soixante-quatre éléments PN pour chaque élément RW, des moyens pour régler le taux d'échantillonnage des éléments de PN dans ladite plage de telle sorte qu'un corrélateur prévu dans les moyens à démodulateur de réception assure une discrimination du gain de traitement entre des composants du signal multiparcours retardé davantage qu'une petite fraction de la durée d'un élément RW,

    le système comprenant en outre

    des moyens pour délivrer un accès multiple par division orthogonale des fréquences, le signal transmis étant donné par:

    $$S_{ik}(t) = PN_{HR}(t).PN_{LR}(t).RW_i(t).[\alpha(t)+jb(t)].\cos(\omega_o t + \delta\omega.k.t)$$

    où $PN_{HR}(t)$ est le code PN à haut débit pour un ensemble d'accès, $PN_{LR}(t)$ est le code PN à bas débit pour un ensemble d'accès, $RW_i(t)$ est la i-ème fonction RW, $|\alpha(t)+jb(t)|$ est la valeur complexe du signal de données modulé en bande de base et $\delta\omega.k.t$ est la valeur du décalage angulaire en fréquence qui correspond à $2\pi$ fois des multiples entiers du taux d'échantillonnage de RW.

FIGURE 1

FIGURE 2

FIGURE 3

10

FIGURE 4

EP 0 838 105 B1

FIGURE 5